# EUROPEAN PATENT APPLICATION

(11) **EP 4 717 906 A1**
(43) Date of publication of application: **01.04.2026**
(21) Application number: 24202673.0
(22) Date of filing: 25.09.2024
(51) Int. Cl.: F03D 7/02, F03D 7/04, F03D 17/00

(54) **METHOD AND COMPUTATIONAL MONITORING SYSTEM FOR MONITORING, EVALUATING AND CONTROLLING NOISE EMISSIONS OF A WIND FARM**

(71) Applicant: eologix sensor technology gmbh, 8020 Graz (AT)
(72) Inventor: Moser, Michael, 8010 Graz (AT); Cooper, Jonathan, Prospect, 5082 (AU)
(74) Representative: Patentanwaltskanzlei Matschnig & Forsthuber OG

(57) **Abstract**

Method for computational monitoring, evaluating and controlling noise emissions of a wind farm (1), the wind farm (1) comprises an acoustic sensor (3a, 3b, 3c , 3d) for detecting noise emissions, said method comprising the following steps:
a. setting up a digital map (dM) of the wind farm (1),
b. providing the processing unit (4) with a first data stream (ds1) of wind turbine operational data (op-d_a, op-d_b, op-d_c, op-d_d) of each wind turbine (2a, 2b, 2c, 2d),
c. providing the processing unit (4) with a second data stream (ds2) of noise emission data (ne-d_a, ne-d_b, ne-d_c, ne-d_d),
d. calculating the noise level on at least one point of reference (pr1, pr2, pr3),
e. evaluating the noise emission of the wind farm (1), and
f. if the at least one calculated noise level (cn1, cn2, cn3) exceeds a threshold level (th1, th2, th3), reducing the noise emission of the wind farm (1).

## Description

The invention relates to a method for computational monitoring, evaluating and controlling noise emissions of a wind farm, the wind farm comprising at least two wind turbines, wherein at least one wind turbine comprises an acoustic sensor for detecting noise emissions.

Methods that attempt monitoring and minimizing noise emission of wind turbines are known from the prior art. For instance, document WO 2010061255 A2 discloses a method of blade pitch control actuation, which reduces rotor noises during operation of a wind turbine. A microphone or a blade mounted pressure sensor provides a noise level feedback signal to a blade pitch controller.

These methods measure the noise level directly on the wind turbine itself to assess the noise produced by said wind turbine. While this method provides a measure to control the noise emission, it has significant drawbacks of being rather inaccurate to produce an optimal outcome.

In practice, many wind farms are placed on agricultural fields or other less frequently visited sites with a certain distance to urban areas, villages or other infrastructures that are sensible to noise. These sensible areas have to be considered as sensible immission points and therefore most noise mitigation efforts do have to goal of minimizing the level of noise that is emitted towards such a sensible area.

It is an object of the present invention to provide a method that allows enhanced monitoring, evaluation and control of the noise emissions of a wind farm.

This object is achieved by a method of the above-mentioned kind, wherein the method comprises the following steps:
a. setting up a digital map of the wind farm, said digital map representing its spatial arrangement in view of at least one point of reference representing a point in space, including at least one threshold value for the noise level for each point of reference and providing this digital map to a processing unit, wherein preferably the digital map also comprises information regarding the topographical landscape of area of the wind farm and its surroundings,
b. providing the processing unit with a first data stream of wind turbine operational data of each wind turbine, said wind turbine operational data comprising at least two of the following data: wind speed; pitch of the rotor blades; wind direction; orientation of the wind turbine in view of the wind direction; power output of the wind turbine; operating noise mode and/or power mode of the wind turbine;
c. providing the processing unit with a second data stream of noise emission data detected by the acoustic sensor/s of the wind turbines,
d. applying - by using the processing unit - an algorithm processing the first and the second data stream and calculating the noise level on the at least one point of reference by way of modeling and/or extrapolation, said noise level on the at least one point of reference being referred to as calculated noise level of the at least one point of reference,
e. evaluating the noise emission of the wind farm by comparing the calculated noise level with the threshold level according to step a), and
f. if the at least one calculated noise level exceeds the threshold level, reducing the noise emission of the wind farm by manipulating the operational mode of at least one wind turbine to reduce the noise emission of the wind farm.

By way of this method sensible areas can be focused on when monitoring the noise emission of a wind farm. This allows to maximize the efficiency of the measures taken to limit the noise emission. The steps a to f can be performed iteratively.

The wind farm can be also referred to as wind park. The digital map representing the spatial arrangement of the wind farm includes 3D coordinates of each wind turbine and of the points of reference. Also, the orientation of the wind farms can be monitored and part of a the digital map that can therefore have live updates. The same considerations do apply if the acoustic sensors are mounted on a mobile spot like rotor blades or the nacelle of the wind turbine. The orientation of the wind turbine (by rotating around a vertical axis) can change over time and is referred to as operational data. Manufacturers often have up to five 'noise' and five 'power' modes for a particular wind turbine, that can be selected and readily swapped between in control software. Noise modes generally reduce pitch and so noise and power, while power modes generally increase both noise and power output. A site with complex noise constraints may swap some turbines between various noise or power modes based on wind speed or direction at that particular time. Preferably, but not mandatory, the majority, in particular all the wind turbines do have acoustic sensors. The more acoustic sensors, the better the accuracy of the entire system. The method can make use of 2, 3, 4, 5 or more acoustic sensors. It is possible that at least and/or a between 10%, 20%, 30%, 40%, 50%, 60%, 80%, 90% or 100% of the wind turbines do have acoustic sensors. Also, it is beneficial that with acoustic sensors potentially failing over the time the complete system still remains operational. However, it is not mandatory to include a plurality of acoustic sensors. An acoustic sensor can be basically any device that can convert acoustic waves into electrical signals. This can comprise any air pressure fluctuations in the µPa to Pa regime transferred into to digital signal representing these fluctuations. So e.g. a high-frequency, high-accuracy barometer could work as an acoustic sensor for the purpose of this invention as well.

The digital map preferably also comprises information regarding the topographical landscape of area of the wind farm and its surroundings. The surroundings extend at least so far as to cover all the points of interest, which are typically arranged outside of the terrain of the wind farm. Topographical data includes information regarding potential large objects, lakes, trees or roads which reflect sound differently than a natural surface such as grass, and contours/elevation profile of the landscape.

Manipulation of the operational mode of at least one wind turbine can be performed for instance as follows: Simple: The results of step f) are fed back to a wind farm control system, this system then derives action; More complex: control signals or suggested modifications are supplied to wind farm control system based on the results of step f), accepted and applied; The measure that has the best noise mitigation while minimizing power loss can be preferably applied. Examples of such measures can be for instance changing the pitch of the rotor blades and/or the rotational speed of the rotor and/or the orientation of the turbine with regard to the wind main direction. The method may also be learned over time, i.e. scenarios for "typical meteorological" or "typical production" situations become part of the "experience" of the system.

A point of reference can be set on the closest point of a sensible area or a point within that sensible area. It is possible that two or more, preferably the majority, in particular each, wind turbine comprises an acoustic sensor mounted on or in the immediate vicinity of the wind turbine. The term "immediate vicinity" means within a distance that equals the length of the rotor blade of the wind turbine, said distance being measured from the closest point of the wind turbine.

It is possible that at least one acoustic sensor is mounted on at least one of the rotor blades of the wind turbine. In particular, it is possible that every wind turbine that has an acoustic sensor has at least one acoustic sensor mounted in its rotor blades - this information can be useful to confirm measurements since the signals picked up inside the blades can relate to the noise emitted by the blades on their outside - depending on the frequency of course.

It is possible that at least one acoustic sensor is mounted on a tower of the wind turbine, preferably at a height that is lower 10 m measured from the base of the tower. Also, a combination of both mounting positions is possible, i.e. two or more acoustic sensors can be arranged on a wind turbine, while having sensor/ s at the tower and/or on the blades or at the nacelle. It is possible to mount a number of acoustic sensors, said number being 2, 3 or more, on the tower and to have one acoustic sensor mounted of a height below 10m and the remaining sensors mounted on higher positions. Also, the acoustic sensors can be distributed evenly along the vertical extension of the tower.

It is possible that in step a) two or more points of reference are provided and in step f) at least one calculated noise level is calculated. It is possible to use two or more points of reference to calculate a single noise level. It is also possible that the number of calculated noise levels is lower than the points of reference, equals the points of reference, or is even greater than the number of points of references.

It is possible that the algorithm applied in step d) takes into account at least one, two or more of the following criterions: the contribution of the acoustic emission of each wind turbine, optionally including the meteorological conditions at the time and the surrounding topography which are affecting noise propagation in various directions, and manipulating specifically those wind turbines that do have a greater impact on the relevant calculated noise level; the technical condition of a wind turbine, in particular wind turbines in a worse technical condition can be preferably selected when applying measures to reduce noise and energy output to even out technical wear of the turbines; turbines that are closer to a technical inspection date can be used more intensively and therefore the remaining wind turbines can be focused on when reducing power output; optimization taking into account a single or a mixture of the following targets: {wear minimization; reduction of mechanical fatigue; extension of service life and/or wind turbine age, market parameters like demanded energy and/or energy spot price}.

The contribution of the acoustic emission of each wind turbine can be determined by detecting the noise signature of each wind turbine and its mitigation on its way to the at least one point of reference. Of course, the proximity of a wind turbine to the point of reference can be taken into account. This calculation can also take into account the effect of different wind speeds and directions. It is possible to use all this information to apply a weighted distribution on the extent of manipulation, market parameters like demanded energy and/or energy price: Certain turbines can feed energy at a day-ahead market price. Energy fed into the grid may be worth more or less, depending on the time when the decision to optimize noise emission needs to be taken. Moreover, it is possible that a minimum of power/energy to be delivered was agreed on. The algorithm may thus consider these criterions to find an ideal decision in the light of the current feed-in tariff which may differ from hour to hour. E.g. if the market price for energy is low while the noise level and the technical load and wear of the wind farm is high due to turbulent wind it could make sense to turn off a wind turbine that mostly affected by wear/contributes to noise completely to comply with noise criterions and reduce wear. If, on the contrary, the market prices for power/energy are high, it is possible to modify the pitch of one or more turbines and operate at reduced power but just be at the border of the threshold value of tolerable acoustic emission.

It is possible that the algorithm applied in step d) takes into account the following criterion: checking the noise emission data for the presence of Special Audible Characteristics, which are of a particular frequency spectrum and/or time varying characteristics of the noise that are specifically noticeable and/or considered unpleasant by humans.

If any Special Audible Characteristics are detected in the noise from the wind turbines then the operation of the time wind turbines may be altered to either reduce or eliminate those characteristics, or the overall level of the sound be reduced, such that a similar level of annoyance would be achieved if those Special Audible Characteristics were not present. Special Audible Characteristics are distinctive characteristics of a sound which are likely to subjectively cause adverse community response at lower levels than a sound without such characteristics. Examples are tonality and impulsiveness. For instance, continuous white noise is less annoying compared to a continuous hum or the sound of a whistle.

It is possible that the algorithm applied in step d) takes into account the following criterion: identifying each wind turbine's specific frequency spectrum signature and detecting its distribution of acoustic emissions within the wind farm by recognizing the signature and/or its power spectrum by each acoustic sensor and including a comparison of the changes of the power spectrum depending on the distance of the acoustic sensor to the wind turbine into the calculation of the calculated noise level. The digital map also includes information about the topography and spatial orientation and position of all the acoustic sensors.

It is possible that the frequency spectrum signature of each wind turbine is detected, also referred to as wind turbine signature and monitored and compared with wind turbine signatures of the remaining wind turbines of the wind farm and wherein changes over time are detected to indicate a detrimental condition of a wind turbine. Examples for a "detrimental condition" are as follows: Wear or even damage of the rotor blades, the nacelle, the electromechanical system, etc.; icing events.

It is possible to detect and separate the signatures of each turbine by knowing having acoustic sensors placed around the wind turbines and to check the specific sound profile that also has typical variations over time due to repeating patterns of changes in its sound profile. For instance caused by the rotation of the rotor blades, peaks in volume but also changes in frequency due to doppler effect, etc. It is even possible to detect the position of a rotor. Consequently, this sound profile also spreads within the wind farm according to the speed of sound. By knowing the positions and distances between the acoustic sensors it is possible to know which sound is supposed to arrive at which position at which time and also approximately its intensity. Therefore, even if the sound profiles of different wind turbines are rather similar, it is still possible to detect certain wind turbines by applying this information.

It is possible that step d) comprises a substep for calibrating the algorithm by receiving noise reference data from at least one additional acoustic sensor that is at least for the time duration of the calibration placed on the at least one point of reference and wherein the corresponding calculated noise level is compared with the corresponding noise reference data and wherein the algorithm processing the first and the second data stream is adjusted to minimize differences between the calculated noise level and the noise reference data. Calibration can be very helpful for the setup of the system. It does not have to take place after setup of the system when "ex works" algorithm is already smart enough. It is possible for this calibration to be achieved using the sensors on wind turbines that are not operating for whatever reason. In that situation the system automatically, or by input from the wind turbine control system determines that turbine is off and subsequently then acts as model calibration point for noise emissions from the other surrounding wind turbines, based on the microphone directivity, mounting orientation of the sensor, and meteorological conditions at that time. At least one point of reference can be an immission point, said immission point being defined as a point of interest. Such a point of interest can be a home where someone could potentially feel disturbed by noise, a campsite, a village, urban area, etc. "calibration points" can be used to calibrate the system for short/long time. These points can be set within and outside of the wind farm. They do not need to match the immission points.

It is possible that points of references can be added or removed to the digital map and the algorithm is configured to generate calculated noise levels for each point of reference depending on its position. Also, it is possible to determine the direction of the transfer of noise. The digital map can also include topographical or surface specifics data of the terrain such as large objects, lakes, trees or roads which reflect sound differently than a natural surface such as grass.

It is possible that the calculated noise levels include psychoacoustic values, for instance tonal audibility, impulsiveness, amplitude modulation, low frequency content, or roughness. The methods for calculating these metrics are defined in the standards used to assess wind farm noise, such as the UK Institute of Acoustics Good Practice Guide on Wind Turbine Noise. Those wind farm noise standards generally provide limits for the level of the Special Audible Characteristics, and adjustments to the overall noise level that are appropriate to account for the Special Audible Characteristic where those limits are exceeded. In the case that a Special Audible Characteristic is detected in the noise then the system would adjust the operation of the wind turbines to minimize the generation of that characteristic, and/or it would adjust the overall level at the surrounding receivers.

It is possible that the algorithm according to step d) is trained at least once by predetermined modification of operational parameters such as pitch angle, yaw angle, or disabling/enabling of a single wind turbine or multiple wind turbines and by checking the influence of the modification on the noise emission data detected by the acoustic sensors, wherein preferably means of variable patterns are applied on the modification of the operational parameters. As a consequence, the contribution of each wind turbine to a certain noise level on a certain point in space, in particular at a point of reference, can be assessed with higher accuracy. Example for such predetermined modifications can be as follows: 1: pitch adjustments of single blade or single rotor (3 blades) by a range between 2° and 5° for 5-10 minutes in a series over the entire wind part. Example 2: introduced yaw misalignment by a range between 2° and 5° degrees for said time period. Or even shut down of single turbines for said time period. Also, it is possible to change the angles between the outer values of above-mentioned range, i.e. between 2° and 5°.

It is possible that information collected by the acoustic sensors and/or generated by the algorithm of step d) and/or produced by this method are automatically provided to an operator of the wind farm. This feature can allow the operate to take action if needed and/or to calculate service intervals.

It is possible that the processing unit is configured to receive input from an operator of the wind farm, wherein this input preferably contains information about the wind direction a forecast of wind speeds and/or adjustments of the threshold levels, wherein this input is used to forecast calculated noise levels and to prepare measures to reduce those if required.

It is possible that - if the at least one calculated noise level exceeds the threshold level - the processing unit generates a proposal for a set of actions to reduce the noise emission of the wind farm, wherein this proposed set of actions is sent to an operator of the wind farm and wherein the operator of the wind farm who can select certain actions to reduce the noise emission of the wind farm.

It is possible that the wind turbine operational data comprising three or more of the following data: wind speed; pitch of the rotor blades; wind direction; orientation of the wind turbine in view of the wind direction; power output of the wind turbine; operating noise or power mode of the wind turbine. Preferably, wind turbine operational data comprises all this data.

It is possible that the algorithm in step d) is also provided with environmental data, namely at least two of the following: rain intensity, air temperature, air pressure, air humidity. Environmental data can also comprise all of this data; for instance rain intensity and air humidity can be used to distinguish changed/increased noise from a wet surface from other causes and collected background noise during rainfall.

Air temperature/pressure detection can be used to correct for run times of signals.

It is possible that the acoustic sensors are selected from the following types: Electret microphones, capacitive microphones, dynamic microphones, MEMS microphones. Also, a mix of these acoustic sensors can be applied or by alternative all the acoustic sensors could be of the same type.

Moreover, the invention also relates to a computational monitoring system for evaluating and controlling noise emissions of a wind farm according to the method of any of the preceding claims, the wind farm comprising at least two wind turbines, wherein the computational monitoring system comprises at least one acoustic sensor for detecting noise emissions, a memory for storing a digital map, a processing unit, wherein said digital map representing its spatial arrangement in view of at least one point of reference representing a point in space, including at least one threshold value for the noise level for each point of reference and providing this digital map to the processing unit, wherein the processing unit is configured to
*receive with a first data stream of wind turbine operational data of each wind turbine, said wind turbine operational data comprising at least two of the following data: wind speed; pitch of the rotor blades; wind direction; orientation of the wind turbine in view of the wind direction; power output of the wind turbine; operating noise or power mode of the wind turbine;
*receive a second data stream of noise emission data detected by the acoustic sensor/s of the wind turbines,
*apply an algorithm processing the first and the second data stream and calculating the noise level on the at least one point of reference by way of modeling and/or extrapolation, said noise level on the at least one point of reference being referred to as calculated noise level of the at least one point of reference,
*evaluate the noise emission of the wind farm by comparing the calculated noise level with the threshold level, and if the at least one calculated noise level exceeds the threshold level,
*provide control means to reduce the noise emission of the wind farm by manipulating the operational mode of at least one wind turbine to reduce the noise emission of the wind farm.

Also, the invention relates to a wind farm including a computational monitoring system according to the invention.

Methods known from prior art usually do not focus on the noise level that is transmitted to a certain sensible area or point but on the contrary simply focus on the emission measured straight at the wind turbine. Since those noise levels do not strictly correlate (depending on distance, wind direction, wind speed, topography, etc.)

In the following, in order to further demonstrate the present invention, illustrative and non-restrictive embodiments are discussed, as shown in the drawings, which show:
Fig. 1 an exemplary top view of a wind farm according to the invention,
Fig. 2 an exemplary combined flow and block chart of the method of the present invention,
Fig. 3 an exemplary top view of a wind farm according to the invention with acoustic sensors mounted on the towers of wind turbines having different spatial orientations,
Fig. 4 an exemplary top view of a wind farm according to the invention wherein the rotor blades of the wind turbines are shown to demonstrate different yaw angles,
Fig. 5 an example of the same wind turbine in two different operational states,
Fig. 6 an example of different wind speeds and angles directed to a wind turbine,
Fig. 7 an example of a wind turbine in two different technical conditions,
Fig. 8 an example of a wind farm having a plurality of wind turbines being position in a uneven topography,
Fig. 9 an example of the propagation of sound within a wind farm,
Fig. 10 exemplary sound profiles,
Fig. 11 examples of potential frequency dependent directional sensitivity of acoustic sensors,
Fig. 12 examples for using two or more calibration points,
Fig. 13 a schematic example of a use case of the present invention, and
Fig. 14 a front view of a wind turbine with acoustic sensors mounted on the tower and the blade.

In the following figures identical reference signs refer to identical features unless expressly depicted otherwise. The reference signs are only for informational purpose and do not delimit the scope of protection.

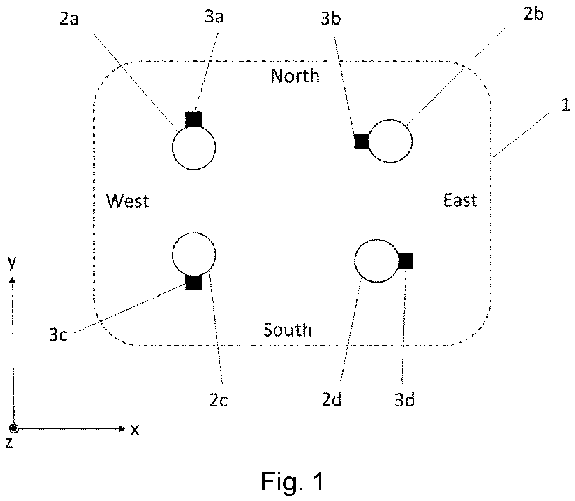

Fig. 1 shows an exemplary top view (x-y plane) of a wind farm 1 according to the invention. This wind farm 1 is configured to execute the method according to the invention. The method allows computational monitoring, evaluating and controlling noise emissions of the wind farm The wind farm 1 comprises at least two wind turbines (in the present example four wind turbines 2a, 2b, 2c, 2d are shown), wherein at least one of the wind turbines 2a, 2b, 2c, 2d comprises an acoustic sensor. In the present example, each wind turbine wind turbines 2a, 2b, 2c, 2d comprise an acoustic sensor 3a, 3b, 3c, 3d. These sensors are configured to detect noise emissions emitted by the wind turbines.

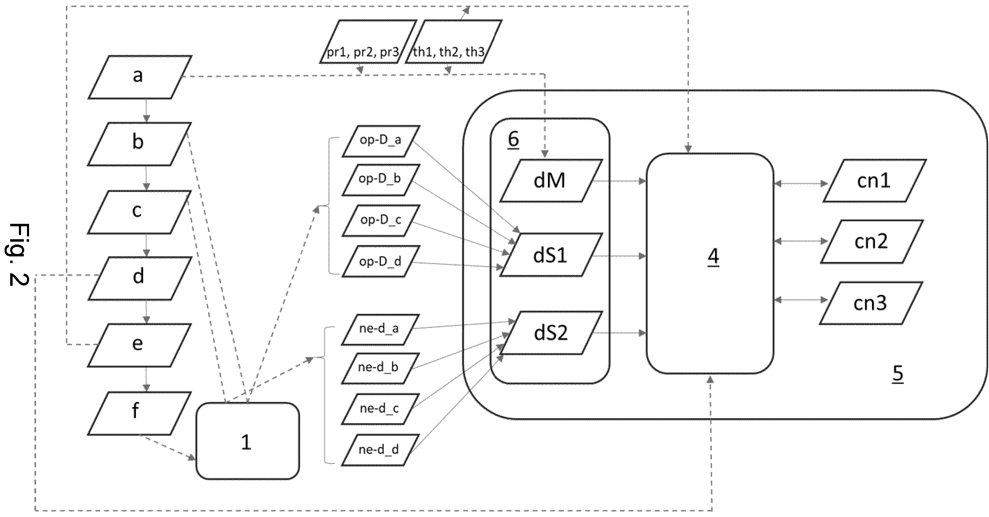

Fig. 2 shows an exemplary combined flow and block chart of the method of the present invention. The method comprises the following steps:
a. setting up a digital map dM of the wind farm 1, said digital map dM representing its spatial arrangement in view of at least one point of reference pr1, pr2, pr3 representing a point in space, including at least one threshold value th1, th2, th3 for the noise level for each point of reference pr1, pr2, pr3 and providing this digital map dM to a processing unit 4, wherein preferably the digital map dM also comprises information regarding the topographical landscape of area of the wind farm 1 and its surroundings,
b. providing the processing unit 4 with a first data stream ds1 of wind turbine operational data op-d_a, op-d_b, op-d_c, op-d_d of each wind turbine 2a, 2b, 2c, 2d, said wind turbine operational data op-d_a, op-d_b, op-d_c, op-d_d comprising at least two of the following data: wind speed v detected at the wind turbine 2a, 2b, 2c, 2d; pitch of the rotor blades 2a; wind direction; orientation of the wind turbine 2a, 2b, 2c, 2d in view of the wind direction; power output of the wind turbine 2a, 2b, 2c, 2d; operating noise mode and/or power mode of the wind turbine 2a, 2b, 2c, 2d;
c. providing the processing unit 4 with a second data stream ds2 of noise emission data ne-d_a, ne-d_b, ne-d_c, ne-d_d detected by the acoustic sensor/s 3a, 3b, 3c, 3d of the wind turbines 2a, 2b, 2c, 2d,
d. applying - by using the processing unit 4 - an algorithm processing the first ds1 and the second data stream ds2 and calculating the noise level on the at least one point of reference pr1, pr2, pr3 by way of modeling and/or extrapolation (making use of the digital map dm), said noise level on the at least one point of reference pr1, pr2, pr3 being referred to as calculated noise level cn1, cn2, cn3 of the at least one point of reference pr1, pr2, pr3,
e. evaluating the noise emission of the wind farm 1 by comparing the calculated noise level cn1, cn2, cn3 with the threshold level th1, th2, th3 according to step a, and
f. if the at least one calculated noise level cn1, cn2, cn3 exceeds the threshold level th1, th2, th3, reducing the noise emission of the wind farm 1 by manipulating the operational mode of at least one wind turbine 2a, 2b, 2c, 2d to reduce the noise emission of the wind farm 1. These steps can be performed iteratively.

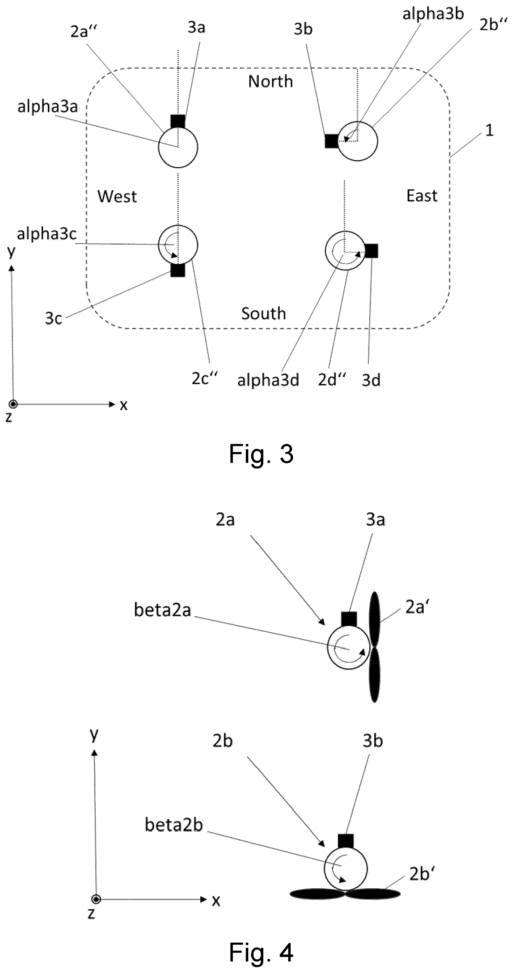

Fig. 3 shows an exemplary top view of a wind farm 1 according to the invention with acoustic sensors 3a, 3b, 3c, 3d mounted on the towers 2a", 2b", 2c", 2d" of wind turbines 2a, 2b, 2c, 2d, said sensors having different spatial orientations alpha3a to alpha3d. In detail, this example shows the following optional arrangement: alpha3a = 0°, alpha3b = 90°, alpha3c = 180°, alpha3d = 270° with respect to 0° = Northern orientation (in line with axis y).

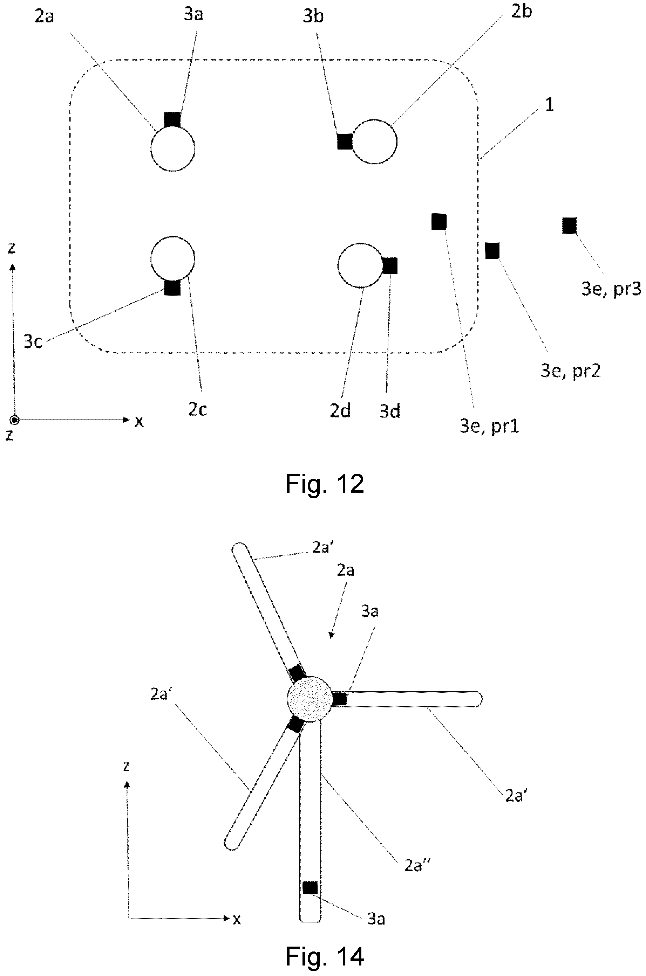

As can be seen in Fig. 3, the majority, in particular each, wind turbine 2a, 2b, 2c, 2d comprises an acoustic sensor 3a, 3b, 3c, 3d mounted on or in the immediate vicinity of the wind turbine 2a, 2b, 2c, 2d. In this case, the sensors are mounted on the tower 2a", 2b", 2c", 2d" of the wind turbine 2a, 2b, 2c, 2d. By alternative or in addition, it is also possible to mount the acoustic sensors 3a, 3b, 3c, 3d on the rotor blades 2a', 2b' of the wind turbines 2a, 2b as shown in Fig. 14.

It is worth noting that in step a) two or more points of reference pr1, pr2, p3 can be provided and in step f) at least one calculated noise level cn1, cn2, cn3 is calculated.

The algorithm applied in step d) can take into account at least one, two or more of the following criterions: the contribution of the acoustic emission of each wind turbine 2a, 2b, 2c, 2d, optionally including the meteorological conditions at the time which are affecting noise propagation in various directions, and manipulating specifically those wind turbines 2a, 2b, 2c, 2d that do have a greater impact on the relevant calculated noise level cn1, cn2, cn3; the technical condition of a wind turbine 2a, 2b, 2c, 2d, in particular wind turbines 2a, 2b, 2c, 2d in a worse technical condition can be preferably selected when applying measures to reduce noise and energy output to even out technical wear of the turbines; turbines that are closer to a technical inspection date can be used more intensively and therefore the remaining wind turbines can be focused on when reducing power output; optimization taking into account a single or a mixture of the following targets: {wear minimization; reduction of mechanical fatigue; extension of service life and/or wind turbine age, market parameters like demanded energy and/or energy price}

Fig. 4 shows an exemplary top view of a wind farm according to the invention wherein the rotor blades 2a' and 2b' of the wind turbines 2a and 2b are shown to demonstrate different yaw angles beta2a (270°) and beta2b (180°) compared to an inline alignment with the axis y.

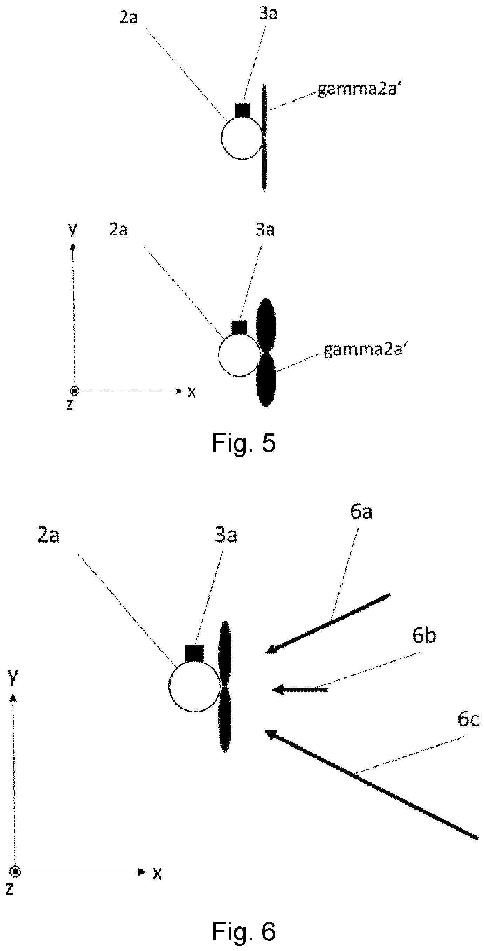

Fig. 5 shows an example of the same wind turbine 2a in two different operational states. Assuming that the wind turbine 2a faces identical wind condition for both scenarios, they show different pitch angles gamma2a' of the rotor blades. For a given wind speed there is usually a single optimal pitch angle gamma2a' to maximize the power output of a wind turbine (as long as the peak output is not reached). However, certain pitch angels will produce higher levels of noise than others. This fact can be exploited when minimizing sound emissions of a wind farm 1.

Fig. 6 shows an example of different wind speeds and angles directed to a wind turbine 2a with an acoustic sensor 3a in a fixed position. Even when the yaw angle and the pitch angle remains unchanged in a basically optimal position, it is common that the wind turbine 2a will still - at least for short periods of time - face non-optimal conditions due to turbulence causing different wind speeds and different wind directions as shown by the exemplary wind velocity vectors 6a to 6c (6a - ENE (east north east), 10 m/s); 6b - E (east), 5m/s; 6c - ESE (east south east), 20m/s).

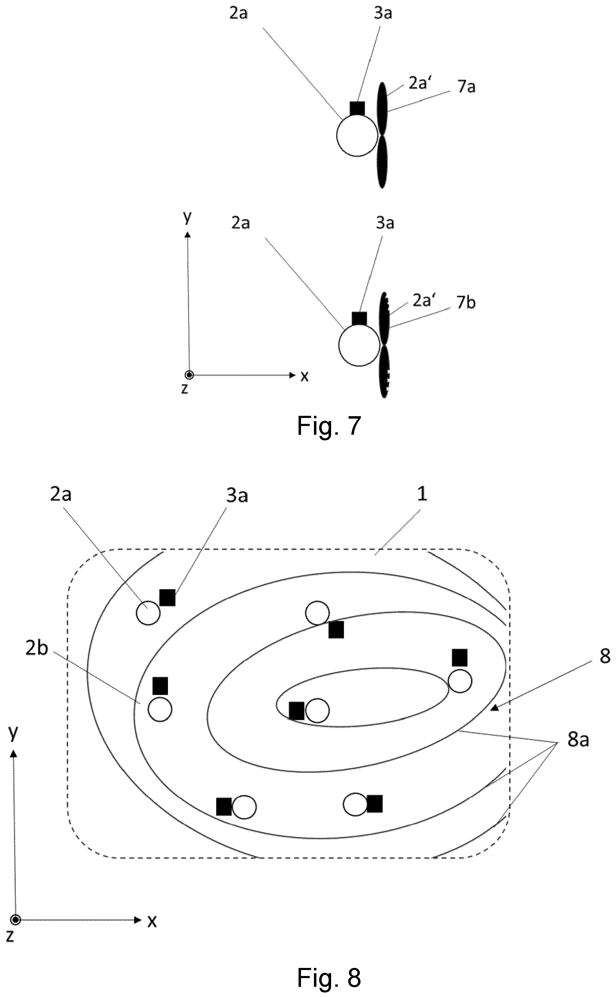

Fig. 7 shows an example of a wind turbine in two different technical conditions. Therein, the surface 7a of the rotor 2a' is without damage in the upper example, contrary to the lower example, wherein the surface 7b shows relevant surface damage which will cause a loss of efficiency of power transfer and higher levels of sound emission.

Fig. 8 shows an example of a wind farm 1 having a plurality of wind turbines 2a, 2b, etc. being position in an uneven topography 8 as disclosed by the various elevation profile lines 8a. The topography 8 can be part of the information provided by the digital map dm to the processor and the algorithm according to step d) can use this information to factor in the effect of the topography, in particular in view of a given wind direction and speed and its effect on the calculated noise levels cn1, cn2, cn3.

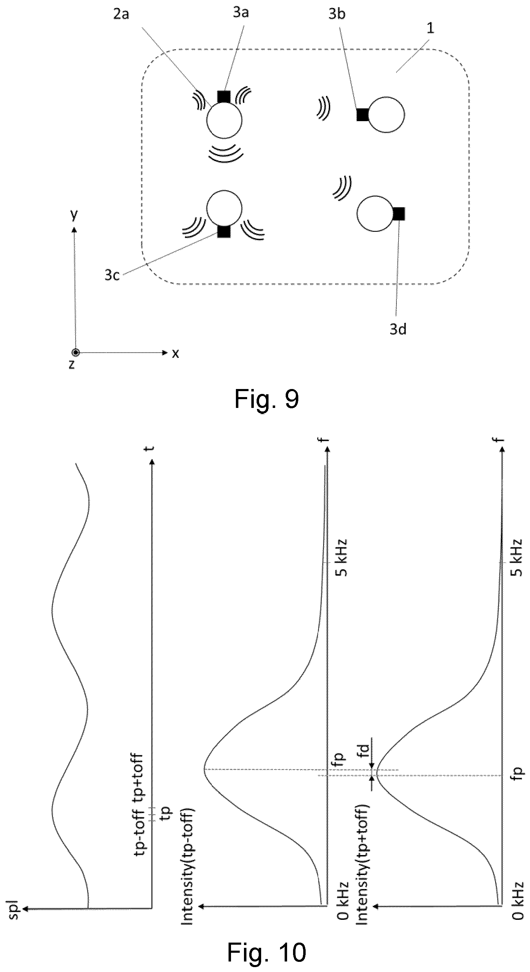

Fig. 9 shows an example of the propagation of sound within a wind farm 1. Therein, the wind turbine 2a on the upper left emits sound in a main direction facing southward (against the direction of the y-axis). The propagation of acoustic sound waves is determined by the characteristics of the transfer medium (air), wind speeds and directions, the topography etc. as can be seen in this example, the wind turbine 2a will sense its own sound emission by the sensor 3a. However, this emission will also be sensed with an offset in time, intensity and also changes in the frequency spectrum by the sensors 3b to 3d. Depending on the topography and the weather conditions, the frequency spectrum can change in a specific manner matching these conditions. For instance, in snow conditions higher frequencies will be more likely to be absorbed while travelling over distance. Therefore, by comparing the results of the different sensors, it is possible to detect certain environmental conditions as well as technical conditions of the wind turbine. Of course, in most cases, also the remaining wind turbines will be active and adding noise. However, it is still possible to detect and separate wind turbines and to track their behavior even when many wind turbines run at the same time. For instance, it is possible to that the algorithm applied in step d takes into account the following criterion: identifying each wind turbine's 2a, 2b, 2c, 2d specific frequency spectrum signature and detecting its distribution of acoustic emissions within the wind farm 1 by recognizing the signature and/or its power spectrum by each acoustic sensor 3a, 3b, 3c, 3d and including a comparison of the changes of the power spectrum depending on the distance of the acoustic sensor 3a, 3b, 3c, 3d to the wind turbine 2a, 2b, 2c, 2d into the calculation of the calculated noise level cn1, cn2, cn3. The digital map dm also includes information about the spatial orientation and position of all the acoustic sensors 3a, 3b, etc.

The algorithm in step d can also be provided with environmental data, namely at least two of the following: rain intensity, air temperature, air pressure, air humidity. It is also possible to comprise all this data.

In particular, it is possible that the frequency spectrum signature of each wind turbine 2a, 2b, 2c, 2d is detected, also referred to as wind turbine signature 2as, 2bs, 2cs, 2ds and monitored and compared with wind turbine signatures 2as, 2bs, 2cs, 2ds of the remaining wind turbines 2a, 2b, 2c, 2d of the wind farm 1 and wherein changes over time are detected to indicate a detrimental condition of a wind turbine 2a, 2b, 2c, 2d.

Fig. 10 shows exemplary schematic sound profiles of the sound emission of a wind turbine 2a measured by a acoustic sensor 3a. The upper graph shows the sound pressure level measured by the acoustic sensor 3a in a situation wherein the sensor 3a is basically watching the rotor blades 2' passing by. Of course, the detected sound pressure level reaches a maximum with every passing bye of a rotor blade 2'. As a consequence, three peaks of the sound pressure level match one rotation of a 3-bladed wind rotor. This pattern will be also detected by acoustic sensors placed on other wind turbines 2b, 2c etc, wherein based on the proximity of the wind turbine 2a (which is known to the processor 4 and the algorithm according to the digital map dm), wind speed, direction, orientation of the sensors 3b, 3c, etc. it is possible to give a sufficiently precise prediction of the sound profile that will arrive at the remaining sensors which allows redundancy in the recognition in unusual behavior of a wind turbine but also detecting sound propagation characteristics and enhancing the calculation of the calculated noise levels cn1 to cn3 and therefore allowing precise monitoring and controlling of the sound emission and the operational characteristics of the wind turbines.

The two graphs below show exemplary frequency spectrums at two different points in time, namely once before a rotor blade passes the sensor 3a (t=tp-toff), and once after the peak time tp has passed (t=tp+toff; wherein toff is an offset to peak time tp). In the upper graph the blade is moving towards the sensor 3a, causing an increase of the detected frequencies due to the doppler shift. The lower graph (t=tp+toff) shows a situation wherein the blade is moving away from the sensor 3a causing a frequency shift in the opposite direction. The total frequency shift fd (as shown in the example of the shifted peak frequency fp) can be detected and also analyzed to determine characteristics of the wind turbine. In particular, it is possible to detect anomalies in the frequency spectrum indicating damage of the surface 7b of a rotor blade 2a' as shown in the example of Fig. 7.

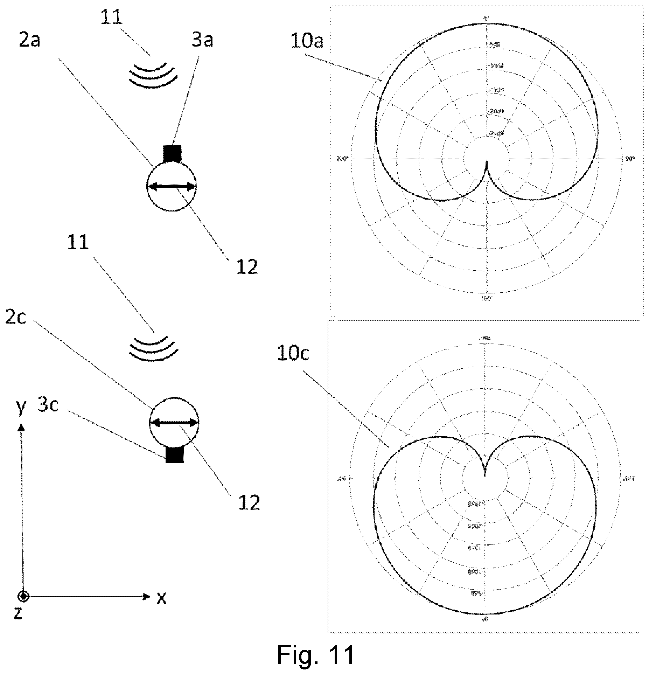

Fig. 11 shows examples of potential frequency dependent directional sensitivity of acoustic sensors 3a, 3c. Therein, the wind turbine 2a with acoustic sensor 3a has frequency dependent directional sensitivity pattern 10a for incoming sound 11 and wind turbine 2c with acoustic sensor 3c has frequency dependent directional sensitivity pattern 10c for incoming sound 11. This dependency is mainly influenced by tower diameter 12 and the mounting location of the respective acoustic sensor.

Fig. 12 shows examples for using two or more calibration points. Step d can comprises a substep for calibrating the algorithm by receiving noise reference data nr-d from at least one additional acoustic sensor 3e that is at least for the time duration of the calibration placed on the at least one point of reference pr1, pr2, pr3 and wherein the corresponding calculated noise level cn1, cn2, cn3 is compared with the corresponding noise reference data nr-d and wherein the algorithm processing the first ds1 and the second data stream ds2 is adjusted to minimize differences between the calculated noise level cn1, cn2, cn3 and the noise reference data nr-d. In the present example, three additional acoustic sensors are placed at three different points of reference that serve as a calibration point in this case. The calibration is very helpful for the setup of the system. Later on, when "ex works" algorithm is already smart enough, it is possible to remove the sensors 3e. It is possible for this calibration to be achieved using the sensors on wind turbines 2a, 2b, 2c, 2d that are not operating for whatever reason. In that situation the system automatically via the difference is sound that is measured, or by input from the wind turbine control system acts as model calibration point for noise emissions from the other surrounding wind turbines 2a, 2b, 2c, 2d, based on the microphone directivity, mounting orientation of the sensor, and meteorological conditions at that time.

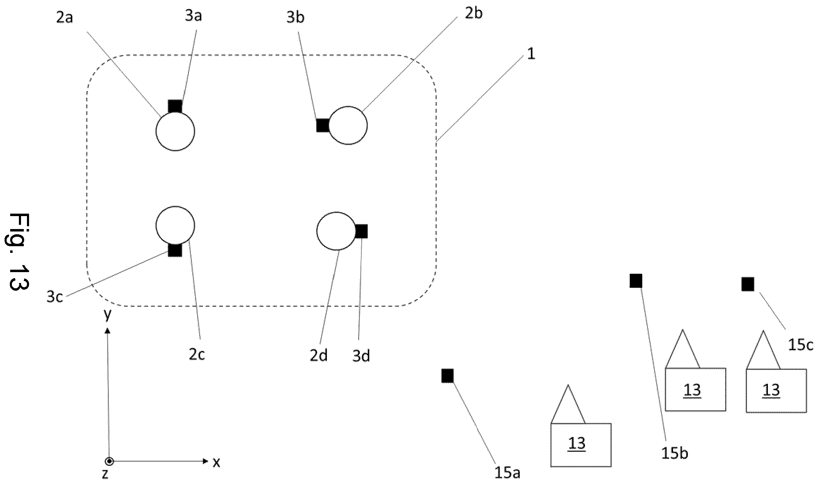

Fig. 13 shows a schematic example of a use case of the present invention. Therein, the wind farm 1 is position in some distance to a village having a number of houses 13. The points of reference pr1 to pr3 are in this case referred to as mission points 15a to 15c to illustrate their relevance for the tolerance of the wind farm 1 by the public. These points will can be monitored according to the invention and if required - the operational characteristics of the wind farm 1 can be altered to reduce the noise exposure within the village or any area that deserves special protection regarding noise exposure.

Of course, it is possible that points of references pr1, pr2, pr3 are added or removed to the digital map dm and the algorithm is configured to generate calculated noise levels pr1, pr2, pr3 for each point of reference depending on its position.

The calculated noise levels cn1, cn2, cn3 can include psychoacoustic values, for instance tonal audibility, impulsiveness, amplitude modulation, low frequency content, or roughness.

It is possible that algorithm applied in step d takes into account the following criterion: checking the noise emission data ne-d_a, ne-d_b, ne-d_c, ne-d_d for the presence of special audible characteristics, which are of a particular frequency spectrum and/or time varying characteristics of the noise that are specifically noticeable and/or considered unpleasant by humans.

Figur 14 shows an a front view of a wind turbine with acoustic sensors 3a mounted on the tower 2a" and the blade 2a', in particular each blade 2a' has a sensor 3a in this example.

The algorithm according to step d can be trained at least once by predetermined modification of operational parameters such as pitch angle, yaw angle, or disabling/enabling of a single wind turbine 2a, 2b, 2c, 2d or multiple wind turbines 2a, 2b, 2c, 2d and by checking the influence of the modification on the noise emission data ne-d_a, ne-d_b, ne-d_c, ne-d_d detected by the acoustic sensors 3a, 3b, 3c, 3d, wherein preferably means of variable patterns are applied on the modification of the operational parameters.

The information collected by the acoustic sensors and/or generated by the algorithm of step d and/or produced by this method can be automatically provided to an operator of the wind farm 1. Therefore, the processor 4 does have an interface for exchanging information, in particular for connecting to the operator and optionally also for allowing the operator to intervene.

The processing unit 4 can be configured to receive input from an operator of the wind farm 1, wherein this input preferably contains information about the wind direction a forecast of wind speeds and/or adjustments of the threshold levels th1, th2, th3, wherein this input is used to forecast calculated noise levels cn1, cn2, cn3. and to prepare measures to reduce those if required.

If the at least one calculated noise level cn1, cn2, cn3 exceeds the threshold level th1, th2, th3 - the processing unit 4 can generate a proposal for a set of actions to reduce the noise emission of the wind farm 1, wherein this proposed set of actions is sent to an operator of the wind farm 1 and wherein the operator of the wind farm 1 who can select certain actions to reduce the noise emission of the wind farm 1.

The wind turbine operational data op-d_a, op-d_b, op-d_c, op-d_d can comprise three or more of the following data: wind speed v detected at the wind turbine 2a, 2b, 2c, 2d; pitch of the rotor blades 2a; wind direction; orientation of the wind turbine 2a, 2b, 2c, 2d in view of the wind direction; power output of the wind turbine 2a, 2b, 2c, 2d; operating noise or power mode of the wind turbine.

The acoustic sensors 3a, 3b, 3c, 3d can for example be selected from the following types: Electret microphones, capacitive microphones, dynamic microphones, MEMS microphones

As shown in Fig. 2, the invention also relates to a computational monitoring system 5 for evaluating and controlling noise emissions of a wind farm 1 according to the method of any of the preceding claims, the wind farm 1 comprising at least two wind turbines 2a, 2b, 2c, 2d, wherein the computational monitoring system comprises at least one acoustic sensor 3a, 3b, 3c, 3d for detecting noise emissions, a memory 6 for storing a digital map dM, a processing unit 4, wherein said digital map dM representing its spatial arrangement in view of at least one point of reference pr1, pr2, pr3 representing a point in space, including at least one threshold value th1, th2, th3 for the noise level for each point of reference pr1, pr2, pr3 and providing this digital map dM to the processing unit 4, wherein the processing unit 4 is configured to
*receive with a first data stream ds1 of wind turbine operational data op-d_a, op-d_b, op-d_c, op-d_d of each wind turbine 2a, 2b, 2c, 2d, said wind turbine operational data op-d_a, op-d_b, op-d_c, op-d_d comprising at least two of the following data: wind speed v detected at the wind turbine 2a, 2b, 2c, 2d; pitch of the rotor blades 2a; wind direction; orientation of the wind turbine 2a, 2b, 2c, 2d in view of the wind direction; power output of the wind turbine 2a, 2b, 2c, 2d; operating noise or power mode of the wind turbine 2a, 2b, 2c, 2d;
*receive a second data stream ds2 of noise emission data ne-d_a, ne-d_b, ne-d_c, ne-d_d detected by the acoustic sensor/s 3a, 3b, 3c, 3d of the wind turbines 2a, 2b, 2c, 2d,
*apply an algorithm processing the first ds1 and the second data stream ds2 and calculating the noise level on the at least one point of reference pr1, pr2, pr3 by way of modeling and/or extrapolation, said noise level on the at least one point of reference pr1, pr2, pr3 being referred to as calculated noise level cn1, cn2, cn3 of the at least one point of reference pr1, pr2, pr3,
*evaluate the noise emission of the wind farm 1 by comparing the calculated noise level cn1, cn2, cn3 with the threshold level th1, th2, th3, and if the at least one calculated noise level cn1, cn2, cn3 exceeds the threshold level th1, th2, th3,
*provide control means to reduce the noise emission of the wind farm 1 by manipulating the operational mode of at least one wind turbine 2a, 2b, 2c, 2d to reduce the noise emission of the wind farm 1.

Also, the invention relates to a wind farm 1 including a computational monitoring system 5 according to the invention.

The invention is not limited to the embodiments shown but is defined by the entire scope of protection of the claims. Individual aspects of the invention or of the embodiments can also be taken up and combined with one another. In particular, device features disclosed in view of the method claims are intended to be combinable with the device features disclose din the method claims and vice versa. Any reference signs in the claims are exemplary and serve only the purpose to allow easier review without restricting the claims.

## Claims

1. Method for computational monitoring, evaluating and controlling noise emissions of a wind farm (1), the wind farm (1) comprising at least two wind turbines (2a, 2b, 2c, 2d), wherein at least one wind turbine (2a, 2b, 2c, 2d) comprises an acoustic sensor (3a, 3b, 3c, 3d) for detecting noise emissions, said method comprising the following steps:
a. setting up a digital map (dM) of the wind farm (1), said digital map (dM) representing its spatial arrangement in view of at least one point of reference (pr1, pr2, pr3) representing a point in space, including at least one threshold value (th1, th2, th3) for the noise level for each point of reference (pr1, pr2, pr3) and providing this digital map (dM) to a processing unit (4), wherein preferably the digital map (dM) also comprises information regarding the topographical landscape of area of the wind farm (1) and its surroundings,
b. providing the processing unit (4) with a first data stream (ds1) of wind turbine operational data (op-d_a, op-d_b, op-d_c, op-d_d) of each wind turbine (2a, 2b, 2c, 2d), said wind turbine operational data (op-d_a, op-d_b, op-d_c, op-d_d) comprising at least two of the following data: wind speed (v detected at the wind turbine (2a, 2b, 2c, 2d); pitch of the rotor blades (2a); wind direction; orientation of the wind turbine (2a, 2b, 2c, 2d) in view of the wind direction; power output of the wind turbine (2a, 2b, 2c, 2d); operating noise mode and/or power mode of the wind turbine (2a, 2b, 2c, 2d);
c. providing the processing unit (4) with a second data stream (ds2) of noise emission data (ne-d_a, ne-d_b, ne-d_c, ne-d_d) detected by the acoustic sensor/s (3a, 3b, 3c, 3d) of the wind turbines (2a, 2b, 2c, 2d),
d. applying - by using the processing unit (4) - an algorithm processing the first (ds1) and the second data stream (ds2) and calculating the noise level on the at least one point of reference (pr1, pr2, pr3) by way of modeling and/or extrapolation, said noise level on the at least one point of reference (pr1, pr2, pr3) being referred to as calculated noise level (cn1, cn2, cn3) of the at least one point of reference (pr1, pr2, pr3),
e. evaluating the noise emission of the wind farm (1) by comparing the calculated noise level (cn1, cn2, cn3) with the threshold level (th1, th2, th3) according to step a), and
f. if the at least one calculated noise level (cn1, cn2, cn3) exceeds the threshold level (th1, th2, th3), reducing the noise emission of the wind farm (1) by manipulating the operational mode of at least one wind turbine (2a, 2b, 2c, 2d) to reduce the noise emission of the wind farm (1).

2. Method according to claim 1, wherein two or more, preferably the majority, in particular each, wind turbine (2a, 2b, 2c, 2d) comprises an acoustic sensor (3a, 3b, 3c, 3d) mounted on or in the immediate vicinity of the wind turbine (2a, 2b, 2c, 2d).

3. Method according to claim 2, wherein at least one acoustic sensor (3a, 3b, 3c, 3d) is mounted on a tower (2a", 2b", 2c", 2d") of the wind turbine (2a, 2b, 2c, 2d), preferably at a height that is lower than 10 m measured from the base of the tower (2a", 2b", 2c", 2d") , or wherein preferably at least one acoustic sensor (3a, 3b, 3c, 3d) is mounted on at least one of the rotor blades (2a', 2b') of the wind turbine (2a, 2b, 2c, 2d).

4. Method according to any of the preceding claims, wherein in step a) two or more points of reference (pr1, pr2, p3) are provided and in step f) at least one calculated noise level (cn1, cn2, cn3,...) is calculated, wherein preferably points of references (pr1, pr2, pr3) can be added or removed to the digital map (dm) and the algorithm is configured to generate calculated noise levels (pr1, pr2, pr3) for each point of reference depending on its position.

5. Method according to any of the preceding claims, wherein the algorithm applied in step d) takes into account at least one, two or more of the following criterions: the contribution of the acoustic emission of each wind turbine (2a, 2b, 2c, 2d), optionally including the meteorological conditions at the time which are affecting noise propagation in various directions, and manipulating specifically those wind turbines (2a, 2b, 2c, 2d) that do have a greater impact on the relevant calculated noise level (cn1, cn2, cn3); the technical condition of a wind turbine (2a, 2b, 2c, 2d), in particular wind turbines (2a, 2b, 2c, 2d) in a worse technical condition can be preferably selected when applying measures to reduce noise and energy output to even out technical wear of the turbines; turbines that are closer to a technical inspection date can be used more intensively and therefore the remaining wind turbines can be focused on when reducing power output; optimization taking into account a single or a mixture of the following targets: {wear minimization; reduction of mechanical fatigue; extension of service life and/or wind turbine age, market parameters like demanded energy and/or energy price}

6. Method according to any of the preceding claims, wherein the algorithm applied in step d) takes into account the following criterion: checking the noise emission data (ne-d_a, ne-d_b, ne-d_c, ne-d_d) for the presence of special audible characteristics, which are of a particular frequency spectrum and/or time varying characteristics of the noise that are specifically noticeable and/or considered unpleasant by humans, wherein preferably the calculated noise levels (cn1, cn2, cn3) include psychoacoustic values, for instance tonal audibility, impulsiveness, amplitude modulation, low frequency content, or roughness.

7. Method according to any of the preceding claims, wherein the algorithm applied in step d) takes into account the following criterion: identifying each wind turbine's (2a, 2b, 2c, 2d) specific frequency spectrum signature and detecting its distribution of acoustic emissions within the wind farm (1) by recognizing the signature and/or its power spectrum by each acoustic sensor (3a, 3b, 3c, 3d) and including a comparison of the changes of the power spectrum depending on the distance of the acoustic sensor (3a, 3b, 3c, 3d) to the wind turbine (2a, 2b, 2c, 2d) into the calculation of the calculated noise level (cn1, cn2, cn3).

8. Method according to any of the preceding claims, wherein the frequency spectrum signature of each wind turbine (2a, 2b, 2c, 2d) is detected, also referred to as wind turbine signature (2as, 2bs, 2cs, 2ds) and monitored and compared with wind turbine signatures (2as, 2bs, 2cs, 2ds) of the remaining wind turbines (2a, 2b, 2c, 2d) of the wind farm (1) and wherein changes over time are detected to indicate a detrimental condition of a wind turbine (2a, 2b, 2c, 2d).

9. Method according to any of the preceding claims, wherein step d) comprises a substep for calibrating the algorithm by receiving noise reference data (nr-d) from at least one additional acoustic sensor (3e) that is at least for the time duration of the calibration placed on the at least one point of reference (pr1, pr2, pr3) and wherein the corresponding calculated noise level (cn1, cn2, cn3) is compared with the corresponding noise reference data (nr-d) and wherein the algorithm processing the first (ds1) and the second data stream (ds2) is adjusted to minimize differences between the calculated noise level (cn1, cn2, cn3) and the noise reference data (nr-d).

10. Method according to any of the preceding claims, wherein the algorithm according to step d) is trained at least once by predetermined modification of operational parameters such as pitch angle, yaw angle, or disabling/enabling of a single wind turbine (2a, 2b, 2c, 2d) or multiple wind turbines (2a, 2b, 2c, 2d) and by checking the influence of the modification on the noise emission data (ne-d_a, ne-d_b, ne-d_c, ne-d_d) detected by the acoustic sensors (3a, 3b, 3c, 3d), wherein preferably means of variable patterns are applied on the modification of the operational parameters.

11. Method according to any of the preceding claims, wherein the processing unit (4) is configured to receive input from an operator of the wind farm (1), wherein this input preferably contains information about the wind direction a forecast of wind speeds and/or adjustments of the threshold levels (th1, th2, th3), wherein this input is used to forecast calculated noise levels (cn1, cn2, cn3.) and to prepare measures to reduce those if required, wherein preferably the information collected by the acoustic sensors (3a, 3b, 3c, 3d) and/or generated by the algorithm of step d) and/or produced by this method are automatically provided to an operator of the wind farm (1).

12. Method according to any of the preceding claims, wherein - if the at least one calculated noise level (cn1, cn2, cn3) exceeds the threshold level (th1, th2, th3) - the processing unit (4) generates a proposal for a set of actions to reduce the noise emission of the wind farm (1), wherein this proposed set of actions is sent to an operator of the wind farm (1) and wherein the operator of the wind farm (1) who can select certain actions to reduce the noise emission of the wind farm (1).

13. Method according to any of the preceding claims, wherein the wind turbine operational data (op-d_a, op-d_b, op-d_c, op-d_d) comprising three or more of the following data: wind speed (v detected at the wind turbine (2a, 2b, 2c, 2d); pitch of the rotor blades (2a); wind direction; orientation of the wind turbine (2a, 2b, 2c, 2d) in view of the wind direction; power output of the wind turbine (2a, 2b, 2c, 2d); operating noise or power mode of the wind turbine; and wherein preferably the algorithm in step d) is also provided with environmental data, namely at least two of the following: rain intensity, air temperature, air pressure, air humidity

14. Method according to any of the preceding claims, wherein the acoustic sensors (3a, 3b, 3c, 3d) are selected from the following types: Electret microphones, capacitive microphones, dynamic microphones, MEMS microphones

15. Computational monitoring system (5) for evaluating and controlling noise emissions of a wind farm (1) according to the method of any of the preceding claims, the wind farm (1) comprising at least two wind turbines (2a, 2b, 2c, 2d), wherein the computational monitoring system comprises at least one acoustic sensor (3a, 3b, 3c, 3d) for detecting noise emissions, a memory (6) for storing a digital map (dM), a processing unit (4), wherein said digital map (dM) representing its spatial arrangement in view of at least one point of reference (pr1, pr2, pr3) representing a point in space, including at least one threshold value (th1, th2, th3) for the noise level for each point of reference (pr1, pr2, pr3) and providing this digital map (dM) to the processing unit (4), wherein the processing unit (4) is configured to
*receive with a first data stream (ds1) of wind turbine operational data (op-d_a, op-d_b, op-d_c, op-d_d) of each wind turbine (2a, 2b, 2c, 2d), said wind turbine operational data (op-d_a, op-d_b, op-d_c, op-d_d) comprising at least two of the following data: wind speed (v detected at the wind turbine (2a, 2b, 2c, 2d); pitch of the rotor blades (2a); wind direction; orientation of the wind turbine (2a, 2b, 2c, 2d) in view of the wind direction; power output of the wind turbine (2a, 2b, 2c, 2d); operating noise or power mode of the wind turbine (2a, 2b, 2c, 2d);
*receive a second data stream (ds2) of noise emission data (ne-d_a, ne-d_b, ne-d_c, ne-d_d) detected by the acoustic sensor/s (3a, 3b, 3c, 3d) of the wind turbines ( 2a, 2b, 2c, 2d),
*apply an algorithm processing the first (ds1) and the second data stream (ds2) and calculating the noise level on the at least one point of reference (pr1, pr2, pr3) by way of modeling and/or extrapolation, said noise level on the at least one point of reference (pr1, pr2, pr3) being referred to as calculated noise level (cn1, cn2, cn3) of the at least one point of reference (pr1, pr2, pr3),
*evaluate the noise emission of the wind farm (1) by comparing the calculated noise level (cn1, cn2, cn3) with the threshold level (th1, th2, th3), and if the at least one calculated noise level (cn1, cn2, cn3) exceeds the threshold level (th1, th2, th3),
*provide control means to reduce the noise emission of the wind farm (1) by manipulating the operational mode of at least one wind turbine (2a, 2b, 2c, 2d) to reduce the noise emission of the wind farm (1)
and/or wind farm (1) including a computational monitoring system (5).
